(19) Europäisches Patentamt / European Patent Office / Office européen des brevets

(11) **EP 3 422 614 B1**

(12) **EUROPEAN PATENT SPECIFICATION**

(45) Date of publication and mention
of the grant of the patent:
**13.09.2023 Bulletin 2023/37**

(21) Application number: **17178093.5**

(22) Date of filing: **27.06.2017**

(51) International Patent Classification (IPC):
***G02B 6/42*** *(2006.01)*  ***G02B 6/293*** *(2006.01)*
***H04Q 11/00*** *(2006.01)*  ***H04J 14/02*** *(2006.01)*

(52) Cooperative Patent Classification (CPC):
**H04J 14/02; G02B 6/29365; G02B 6/2938;**
**G02B 6/4215;** H04Q 2011/0016

(54) **OPTICAL WAVELENGTH DIVISION MULTIPLEXING DEVICE**

OPTISCHE WELLENLÄNGENMULTIPLEXVORRICHTUNG

DISPOSITIF DE MULTIPLEXAGE PAR RÉPARTITION EN LONGUEUR D'ONDE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2019 Bulletin 2019/01**

(73) Proprietor: HUAWEI TECHNOLOGIES CO., LTD.
**Shenzhen Guangdong 518129 (CN)**

(72) Inventors:
• **RAMPULLA, Alberto**
**80992 Munich (DE)**

• **ZAGO, Paolo**
**80992 Munich (DE)**

(74) Representative: **Roth, Sebastian**
**Mitscherlich PartmbB**
**Patent- und Rechtsanwälte**
**Karlstraße 7**
**80333 München (DE)**

(56) References cited:
**EP-A1- 1 066 697     EP-A1- 3 088 928**
**US-A1- 2003 002 101     US-A1- 2017 134 099**
**US-A1- 2017 139 143     US-B1- 6 515 776**

EP 3 422 614 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to an optical wavelength division demultiplexing device for receiving light with N wavelengths providing N channels.

BACKGROUND

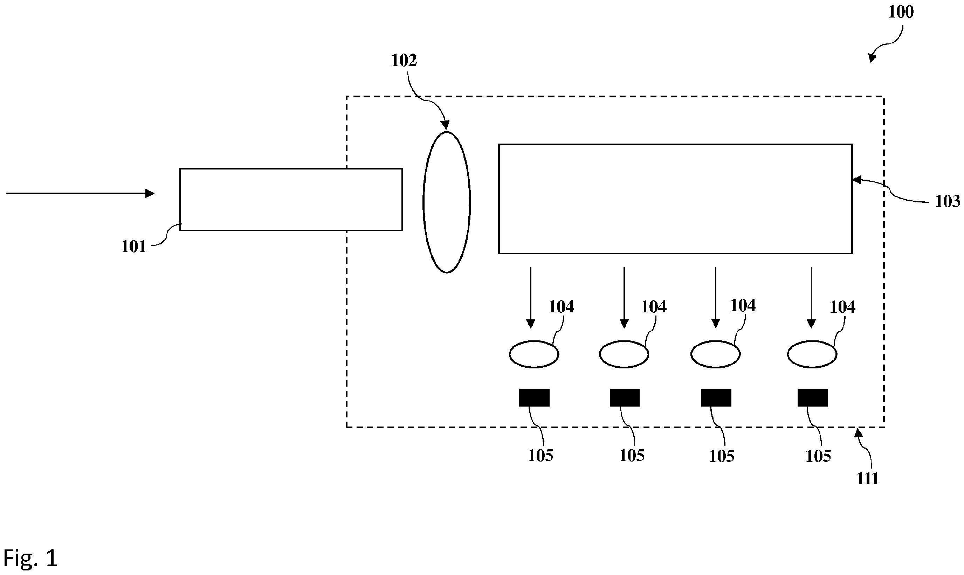

A variety of different kinds of wavelength division multiplexing (WDM) receivers is known in the art, which are key components in high-speed optical telecommunication applications. WDM receivers typically comprise a fiber receptacle for receiving a fiber optic cable, a collimating lens, a filter block (i.e. a demultiplexer (DeMUX)), focusing lenses and photodiode sensors for each channel. **FIG. 1** shows such a known 4-channel WDM receiver comprising photodiodes sensors arranged at a base plate of the WDM receiver.

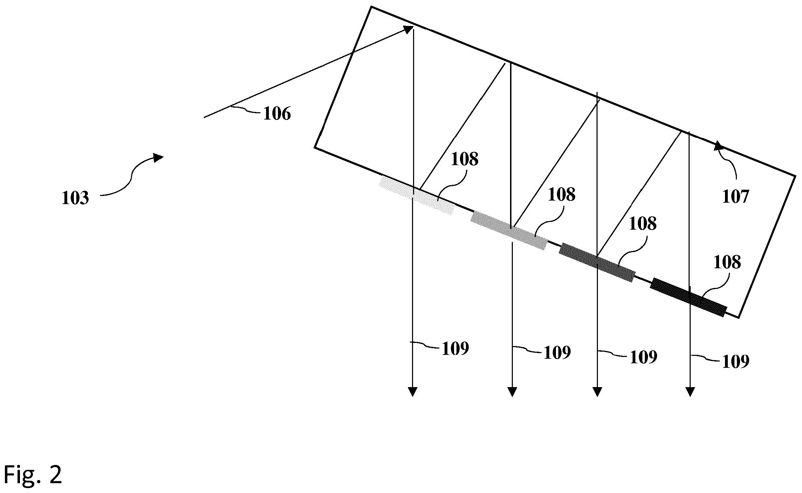

It is a general known difficulty to design a WDM receiver in a compact manner. In order to simplify the overall device layout into a compact unit, a known DeMUX arrangement typically comprises a planar reflecting surface and several wavelength filters provided at an oppositely arranged planar surface. Each filter is transparent for a specific wavelength of the light beam and reflective for the rest of the light beam. Thus, at each filter a specific wavelength of the light beam can be decoupled, thereby providing a respective output light beam, which is guided to the focusing lens and photodiode sensor of the respective channel. With decoupled beam it is meant in the present document that the reflected light is transmitted through a filter which is transparent to a defined wavelength. The not-decoupled part of the light beam is reflected back to the reflecting surface and further reflected to the next filter, until the entire light beam is divided into respective output light beams. Such DeMUX are generally called zigzag blocks or zigzag filters, because of the multiple reflections of the light beam inside the material guiding the light beam in a zigzag line between the reflecting surface and the filters. In **FIG. 2** such a known zigzag block is shown.

In order to reduce the costs for such a WDM receiver, the use of plastic materials, in particular for the DeMUX and for a body/package comprising the collimating and the focusing lenses have been proposed.

Photodiode sensors typically have a comparable small active detection area requiring an exact alignment of the filter block 103, the focusing lenses 104 and the photodiode sensors 105 to achieve an efficient signal detection and low optical cross-talk between adjacent channels (i.e. to provide a high sensitivity). However, due to the manufacturing tolerances and positional tolerances in the assembling process, the actual position of each component may have an offset and tilt with respect to an ideal position. These tolerances typically result in a displacement of the output light beams with respect to a nominal alignment (i.e. resulting in an alignment error or a misalignment of the output beams).

In case, the aperture dimension of a focusing lens is large enough to collect all the light of the output beam, such an alignment error of the output beam can be compensated. On the other hand, if the aperture of a focusing lens is not large enough to compensate the occurring alignment error, the light may be partly lost (low power detection) or detected by a photodiode sensor of an adjacent channel (channel cross-talk). However, the dimension of the aperture of the focusing lens is limited by the distance of two adjacent output light beams, which is determined by the DeMUX design and arrangement. For example, the distance of two adjacent output light beams of a known 4-channel WDM receiver is typically around 500 μm.

US 6,515,776 B1 discloses an optical device including a fiber collimator and a plurality of fiber assemblies sequentially optically coupled to the fiber collimator by a reflected light path of a substantially parallel beam. The fiber collimator includes an optical fiber and a lens opposed to the optical fiber. Each fiber assembly includes an optical filter for providing the reflected light path, an optical fiber optically coupled to the optical filter by its transmitted light path, and a lens provided between the optical filter and this optical fiber.

US 2017/139143 A1 discloses a wavelength division demultiplexing device with a filter block comprising N reflecting surfaces and an oppositely arranged surface with N filters, with N being the number of demultiplexed wavelengths. The distance between the reflecting surfaces and corresponding filters of the wavelength demultiplexing device varies.

SUMMARY

In view of the above-mentioned problems and disadvantages, the present invention aims to provide a WDM receiver having a higher tolerance with respect to alignment errors of the output beams.

The object of the present invention is achieved by the solution provided in the enclosed independent claim. Advantageous implementations of the present invention are further defined in the dependent claims.

A first aspect of the present invention provides an optical wavelength division multiplexing (WDM) device for receiving light with N wavelengths providing N channels, wherein the device comprises:

- a filter block (DeMUX) comprising a plurality of N reflecting surfaces and an oppositely arranged surface at which a plurality of N filters is arranged such that the light can be reflected between the plurality of N reflecting surfaces and the plurality of N filters, wherein each of said N filters is transparent to a defined wavelength; and
- a plurality of N focusing lenses, wherein each of the N focusing lenses is associated to a respective filter for collecting and focusing the light passing through the associated filter, and wherein each focusing lens from the plurality of N focusing lenses has a determined aperture dimensions ($C_i$); wherein i is the number of the respective channel; wherein each of the plurality of N reflecting surfaces is associated to a respective filter, wherein the distance **($L_i$)** between at least one of the N reflecting surfaces and its associated filter is different from the distance **($L_i$)** between other N reflecting surfaces and their associated filters; and wherein

the aperture dimension **($C_i$)** of an $i^{th}$ focusing lens is

$$C_i = 2 \times (\textstyle\sum_{j=1}^{i} L_j) \times (\tan(\theta_i + \theta_1) \times \cos(\theta_0 - \theta_1) - \tan(\theta_i - \theta_1) \times \cos(\theta_0 + \theta_1)) + \emptyset;$$

wherein

$\emptyset$ is the beam size;
**$C_i$** is the aperture dimension of the $i^{th}$ focusing lens which corresponds to an $i^{th}$ channel;
**i** is the number of the respective channel;
**$L_i$** is the distance between the $i^{th}$ reflecting surface and the associated $i^{th}$ filter;
$\theta_i$ is the reflection angle of the beam at the $i^{th}$ reflecting surface;
$\theta_0$ is the reflection angle of the beam at the first reflecting surface associated to the first channel;
$\theta_1$ is a reflection angle error; and

**N** is the total number of channels, n e [1, 2,..., N].

One of the main ideas of the present invention is to allow an adaptation of the aperture dimensions of the focusing lenses to the alignment errors of the output beams, i.e. to compensate the typical alignment errors by adapting the aperture dimensions of the focusing lenses. In other words, to increase the aperture dimensions ($C_i$) of the focusing lenses of these channels, which are more prone to a misalignment of the output beam and optionally to decrease the aperture dimensions ($C_i$) of the focusing lenses of these channels, which are less prone to a misalignment of the output beam. In this respect, it has been found that the level of misalignment of the output beam is mostly linked to the number of reflections inside the filter block, i.e. the alignment error of the output beam typically increases with the number of reflections of the light beam in the filter block. Thus, the aperture dimensions of the focusing lenses of the lower channels can be provided smaller, wherein the aperture dimensions of the focusing lenses of the higher channels can be provided larger.

The filter block may comprise a flat single reflecting surface and at the opposite side several filters (e.g. provided by respective coatings). Each of the filters is transparent for a specific wavelength of the light beam such that at a respective filter, a respective decoupled light beam (i.e. an output beam) can be guided to an aperture of an associated focusing lens and thus, to a below arranged photodiode sensor. Whereby, each filter reflects the not decoupled parts of the light beam back to the reflecting surface, which in turn reflects the light beam to the next filter, until the light beam is completely decoupled. Instead of a single reflecting surface, the filter block may also comprise several individual reflecting surfaces arranged at different distances.

Moreover, different distances ($\Delta_i$) between two central optical axes of adjacent focusing lenses can be provided allowing to adapt the pitches of two adjacent output beams, i.e. to decrease or increase the pitch of two adjacent output beams. This in turn allows to provide more space for the apertures of the focusing lenses of these channels, which are more prone to a misalignment of the output beam and less space for the apertures of the focusing lenses of these channels, which are less prone to a misalignment of the output beam.

In an implementation form of the first aspect, the distance ($L_i$) between one of the N reflecting surface and the associated filter increases with increasing channel number (i), wherein the difference of two distances ($L_i$) of adjacent reflecting surfaces and their associated filters is preferably constant. In other words, the reflecting surfaces of the filter block preferably have a staircase-shaped cross section. Thereby, a constant increasing rate of the distance ($\Delta_i$) between two central optical axes of adjacent focusing lenses can be provided.

In a further implementation form of the first aspect, the distance ($\Delta_i$) between two central optical axes of adjacent focusing lenses increases with increasing channel number (i). As mentioned-above, it has been found that the level of misalignment of the output beam is mostly linked to the number of reflections inside the filter block, i.e. the alignment error of the output beam increases with the number of reflections of the light beam in the filter block. Thus, providing an increased distance ($\Delta_i$) for the higher channels allows to increase the aperture dimensions of the focusing lenses for the higher channels and thus compensating the increased displacement of the output beams occurring at these channels. In this respect, the distance ($\Delta_i$) between two central optical axes of adjacent focusing lenses is preferably

$$\Delta_i = 2 \times L_i \times \sin \theta_i \; ;$$

Wherein

$L_i$ is the distance between an $i^{th}$ reflecting surface and the associated filter; and
$\theta_i$ is the reflection angle of the beam at the $i^{th}$ reflecting surface.

By the formula of the aperture dimension ($C_i$), a correlation for calculating a preferred aperture dimension ($C_i$) of a respective focusing lens of the $i^{th}$ channel is provided, wherein the formula is adapted to a filter block having different distances ($L_i$) between the respective reflecting surface and the associated filter.

In a further implementation form of the first aspect, the reflection angle ($\theta_i$) of the beam at one of the N reflecting surfaces is constant for all reflecting surfaces.

In a further implementation form of the first aspect, the device further comprises: a fiber optic cable receptacle configured to receive the end of a fiber optic cable; and a collimating lens optically aligned with the fiber optic cable receptacle and configured to guide the light from the fiber optical cable to the filter block. In this respect, it is preferred that the fiber optic cable receptacle, the collimating lens, the plurality of N focusing lenses and the plurality of N filters are integrally formed as a package, wherein the fiber optic cable receptacle, the collimating lens, the plurality of N focusing lenses are preferably formed by means of plastic molding and the N filters are preferably applied by means of coating. Thus, a WDM receiver can be provided by means of such a compact (plastic) package and a filter block having a high tolerance with respect to a potential misalignment of the focusing optics, the filters and the photodiode sensors and with respect to the production tolerances of the respective parts.

In a further implementation form of the first aspect, the N wavelengths having a wavelength between 1260 nm to 1360 nm or 1460 nm to 1620 nm.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

## BRIEF DESCRIPTION OF THE DRAWINGS

The above described aspects and implementation forms of the present invention will be explained in the following description of specific embodiments in relation to the enclosed drawings, in which

**FIG. 1** shows a WDM receiver according to the prior art.
**FIG. 2** shows the filter block used in the WDM receiver of FIG. 1.
**FIG. 3** shows an illustration of the typical detection failures.
**FIG. 4** shows a WDM receiver not forming part of the present invention.
**FIG. 5** shows the WDM receiver shown in FIG. 4.
**FIG. 6** shows a WDM receiver according to an embodiment of the present invention.
**FIG. 7** shows the WDM receiver shown in FIG. 6.
**FIG. 8** shows the WDM receiver shown in FIG. 6 and FIG. 7.

## DETAILED DESCRIPTION OF THE EMBODIMENTS

**FIG. 1** shows a known 4-channel WDM receiver 100 comprising: a fiber receptacle 101, a collimating lens 102, a demultiplexer (DeMUX) 103, focusing lenses 104 and photodiode sensors 105. **FIG. 2** shows the filter block 103 in more detail, in particular the zigzag shaped guiding of an input light beam 106 through the filter block 103.

By means of the fiber receptacle 101, a fiber optic cable (not shown) is connected to the WDM receiver 100, thereby guiding the light beam 106 via the collimating lens 102 into the filter block 103.

As can be seen in figure 2, the filter block 103 comprises a flat single reflecting surface 107 and at the opposite side several filters 108 (e.g. provided by respective coatings). Each of the filters 108 is transparent for a specific wavelength of the light beam 106 such that at a respective filter 108, a respective decoupled light beam 109 (i.e. an output beam 109) can be guided to a focusing lens 104 and a below arranged photodiode sensor 105, i.e. to an output channel of the filter block 103. With decoupled beam it is meant in the present document that the reflected light is transmitted through a filter which is transparent to a defined wavelength. Whereby, each filter 108 reflects the not decoupled parts of the light beam 106 back to the reflecting surface 107, which in turn reflects the light beam 106 to the next filter 108, until the light beam 106 is completely decoupled.

As can be taken from **FIG. 2**, the decoupled light beams 109 are not decoupled at the filters 108 in a perpendicular manner with respect to the reflecting surface of the filter 108. This is because the light beam 106 is not directed in a perpendicular manner onto the filters 108 and also due to a refraction effect according to the Snell's law when a light beam passes two different media, here the material of the filter block 103 (e.g. glass or plastic) and the surrounding material (e.g. air or a filler gas). Therefore, if the filter block 103 is parallel to a base plate 111 of the WDM receiver 100 at which the focusing lenses 104 and the photodiode sensors 105 are arranged, the decoupled light beams cannot be perpendicular to the photodiode sensors 105. However, in order to maximize the collection efficiency of the photodiode sensors 105 such a perpendicular light beam is desired. In the shown embodiment for straighten the output light beams 109, the filter block 103 is tilted with respect to the base plate 111.

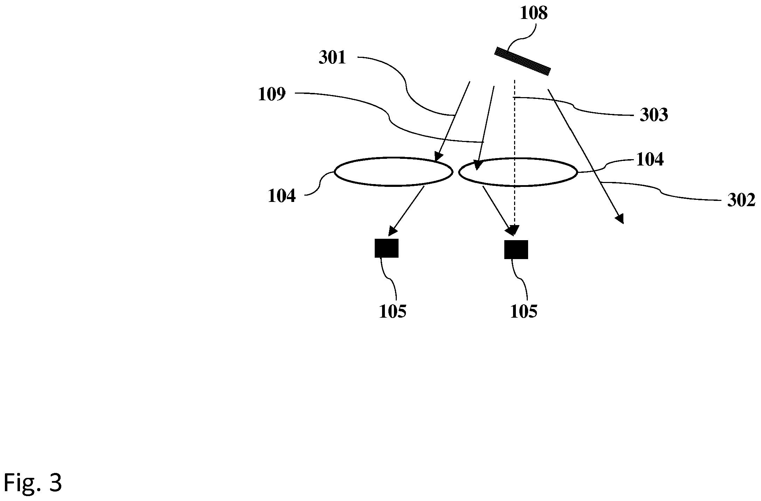

**FIG. 3** shows the typical misalignments of an output beam resulting in channel cross-talk (cf. reference 301) or low power detection (cf. reference 302). As can be taken from **FIG. 3**, by means of the focusing lenses 104, a certain misalignment of the output beams 109 with respect to a nominal alignment (cf. reference 303) can be compensated, if the aperture dimension of the respective focusing lens 104 is large enough.

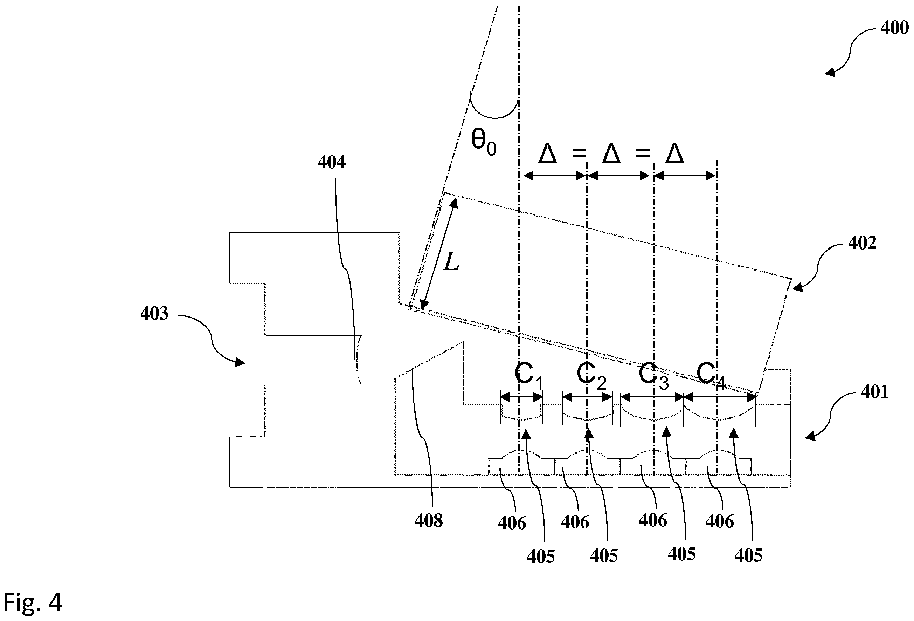

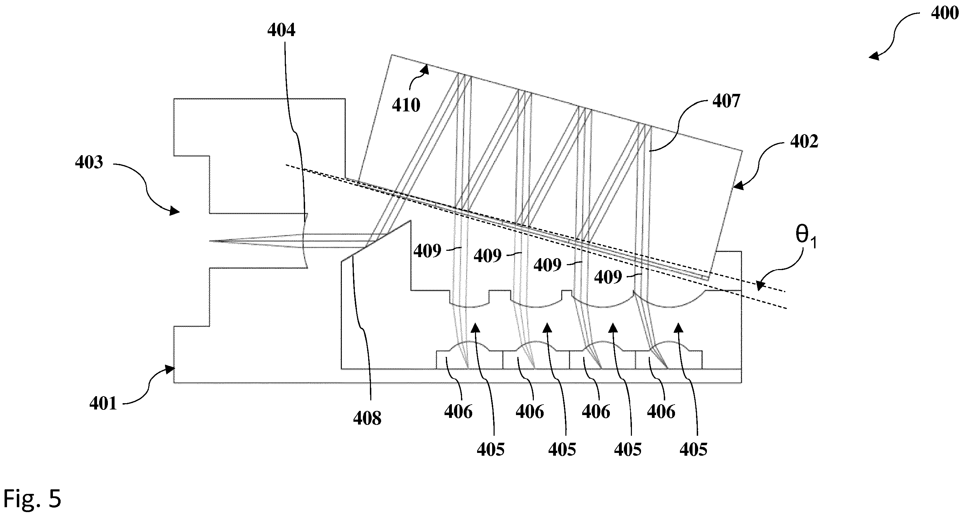

**FIG. 4** and **FIG. 5** show a WDM receiver 400 not forming part of the present invention. wherein the WDM receiver 400 comprises a package 401 and a filter block 402.

The package 401 comprises a fiber optic cable receptacle 403, a collimating lens 404 and focusing lenses 405, each associated to a filter of the filter block 402 and arranged above a respective photodiode sensor 406 which are arranged in a receptacle of the package 401 provided at a base plate of the WDM receiver 400. It can be understood that the term "associated" means, for example, that a reflecting surface directs the light beam to an associated filter, thus the light beam passing through the associated filter is collected and focused by an associated focusing lenses.

The fiber optic cable receptacle 403 is configured to receive the end of a fiber optic cable (not shown). The collimating lens 404 is optically aligned with the fiber optic cable receptacle 403 and configured to guide a light beam 407 from the fiber optical cable to the filter block 402, wherein depending on the specific design of the WDM receiver 400 further reflecting surfaces 408 for guiding the light beam 407 to the filter block 402 can be provided in the WDM receiver 400.

The focusing lenses 405 comprise an aperture for collecting the output beam 409 and a focusing element for guiding the output beam 409 to the active area of the photodiode sensor 406. Each focusing lens 405 is associated to a filter of the filter block 402 for collecting and focusing an output beam 409 decoupled from a respective filter of the filter block 402. The filter block 402 of the first embodiment corresponds to the filter block 103 shown in **FIG. 2** and comprises a single flat reflection surface 410 and oppositely arranged filters corresponding to respective channels of the WDM receiver 400, wherein the filters are also arranged on a single flat surface.

The package 401 is preferably integrally formed by means of plastic molding. The filters are preferably applied by means of coating onto a surface of the filter block 402 opposite to the reflecting surface 410. However, it is also possible to apply the filters on a surface of the package 401 in such a way that the filters are oppositely arranged to the reflecting surface 410 of the filter block 402 in assembled condition.

In the first embodiment of the invention, the distance ($\Delta$) between two central optical axes of adjacent focusing lenses 405 is constant. Notably, the distance ($\Delta$) between two central optical axes of adjacent focusing lenses 405 corresponds to the distance of two adjacent output light beams 409, if no alignment errors of the output beams 409 occurred, i.e. the nominal alignments of the output beams 409 (cf. **FIG. 3**, reference 303). In this respect, it is preferred that the distance ($\Delta$) between two central optical axes of adjacent focusing lenses 405 is

$$\Delta = 2 \times L \times \sin \theta_0 ;$$

wherein

L is the distance between the reflecting surface 410 and the filters of the channels, where the filters of the channels may be arranged on a single flat surface; and
$\theta_0$ is the reflection angle of the beam at the reflecting surface 410.

The respective aperture dimension ($C_i$) of an $i^{th}$ focusing lens 405 is

$$C_i = i \times 2 \times L \times (\tan(\theta_0 + \theta_1) \times \cos(\theta_0 - \theta_1) - \tan(\theta_0 - \theta_1) \times \cos(\theta_0 + \theta_1)) + \varnothing;$$

wherein

$\varnothing$ is the beam size;

$C_i$ is the aperture dimension of an $i^{th}$ focusing lens 405 of an $i^{th}$ channel;

i is the number of the respective channel (here 1 to 4);

L is the distance between the reflecting surface 410 and the filters of the channels, where the filters of the channels may be arranged on a single flat surface;

$\theta_0$ is the reflection angle of the beam at the reflecting surface 410;

$\theta_1$ is a reflection angle error occurring due to manufacturing tolerances and positional tolerances in the assembling process (cf. FIG. 5).

By the above formula, a correlation for calculating the preferred aperture dimension ($C_i$) of a respective focusing lens 405 of the $i^{th}$ channel is provided, wherein the formula is adapted to the filter block 402 having a single flat reflecting surface 410 and filters also arranged at a single flat surface such that the distance (L) between the reflecting surface 410 and the filters is constant.

As a result, by means of the variable aperture dimensions ($C_1$, $C_2$, $C_3$, and $C_4$) of the focusing lenses 405, a higher tolerance with respect to potential alignment errors can be provided with the WDM receiver 400 according to the embodiment of the present invention.

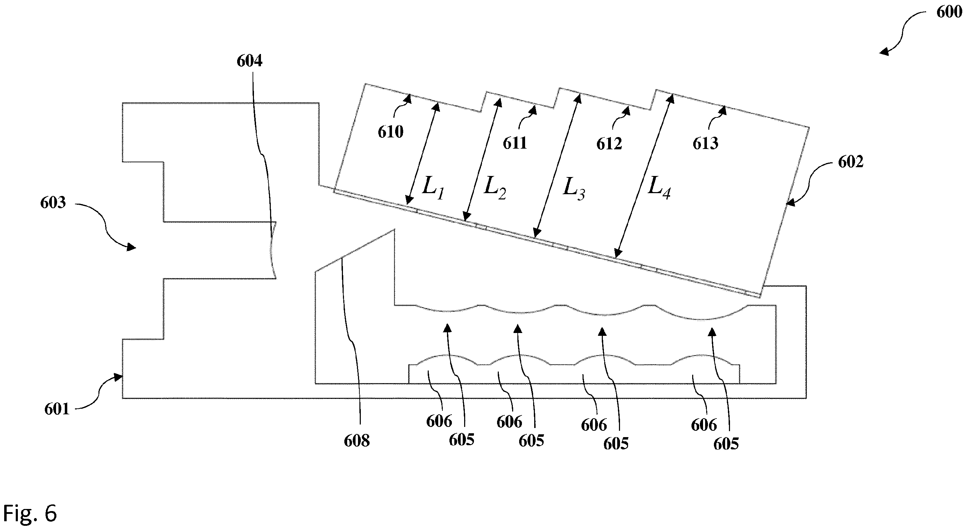

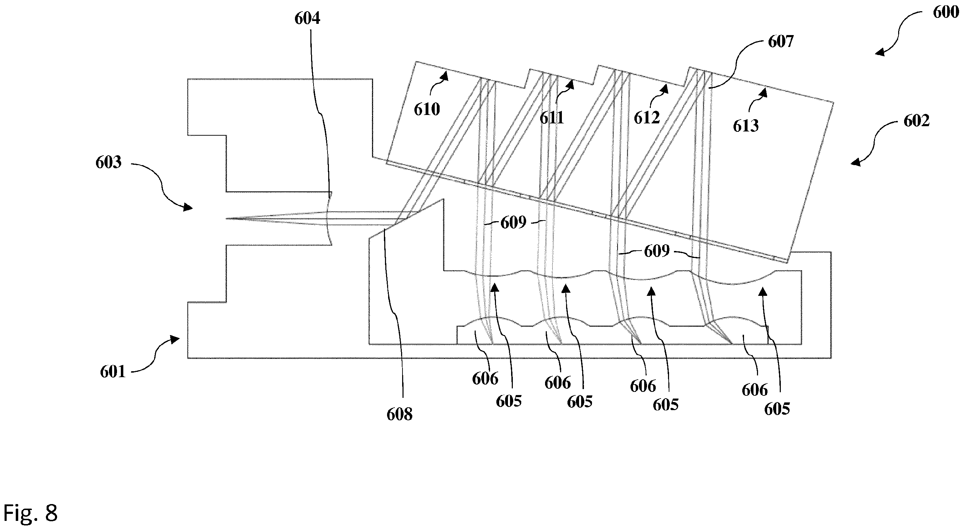

FIG. 6 to FIG. 8 show a WDM receiver 600 according to a second embodiment of the present invention, wherein the WDM receiver 600 comprises a package 601 and a filter block 602.

Also the package 601 comprises a fiber optic cable receptacle 603, a collimating lens 604 and focusing lenses 605, each associated to a filter of the filter block 602 and arranged above a respective photodiode sensor 606, which are arranged in a receptacle of the package 601 provided at a base plate of the WDM receiver 600. As explained above, the fiber optic cable receptacle 603 is configured to receive the end of a fiber optic cable (not shown). The collimating lens 604 is optically aligned with the fiber optic cable receptacle 603 and configured to guide a light beam 607 from the fiber optical cable to the filter block 602, wherein depending on the specific design of the WDM receiver 600 further reflecting surfaces 608 for guiding the light beam 607 to the filter block 602 can be provided. The focusing lenses 605 comprise an aperture for collecting the output beam 609 and a focusing element for guiding the output beam 609 to the active area of the photodiode sensor 606. Each focusing lens 605 is associated to a filter of the filter block 602 for collecting and focusing an output beam 609 decoupled from the associated filter of the filter block 602.

In contrast to the first embodiment, the filter block 602 of the second embodiment does not only comprise one flat reflecting surface 410, but N reflecting surfaces, i.e. a reflecting surface with respect to each channel. The shown 4-channel WDM receiver 600, for example, comprises four reflecting surfaces 610 to 613, wherein each of the reflecting surfaces 610 to 613 is associated to a respective filter. Each reflecting surface 610 to 613 is arranged with a different distance ($L_{1-4}$) with respect to the associated filter, wherein the difference of two distances ($L_i$) of adjacent reflecting surfaces 610 to 613 and its associated filters is preferably constant. In other words, the reflecting surfaces 610 to 613 of the filter block 602 preferably have a staircase-shaped cross section.

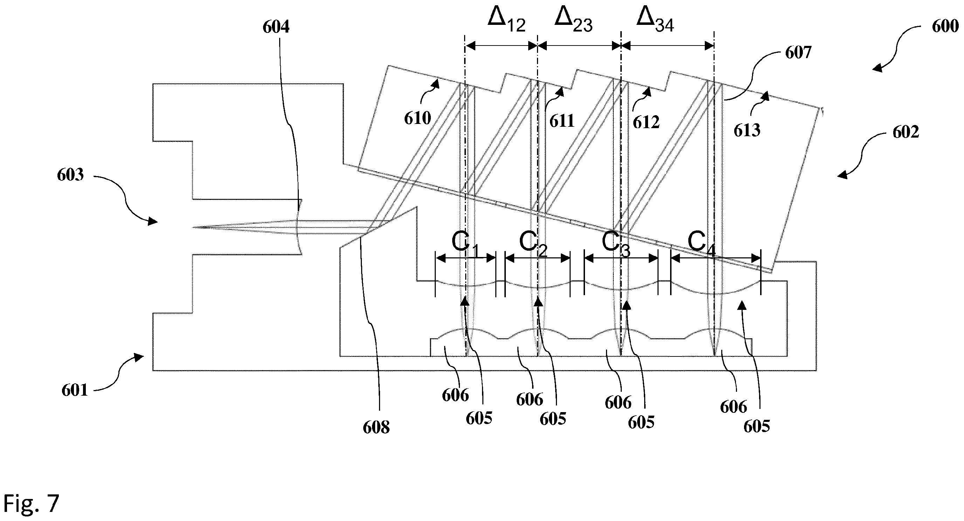

As can be taken from FIG. 7, thereby, different distances ($\Delta_i$) between two central optical axes of adjacent focusing lenses 605 can be applied. Thereby, allowing to adapt the pitches of two adjacent output beams 609, i.e. to decrease or increase the pitch of two adjacent output beams 609. This in turn allows to provide more space for the apertures of the focusing lenses 605 of these channels, which are more prone to a misalignment of the output beam 609 and/or less space for the focusing lenses 605 of these channels, which are less prone to a misalignment of the output beam 609.

The distance ($\Delta_i$) between two central optical axes of adjacent focusing lenses 605 is preferably

$$\Delta_i = 2 \times L_i \times \sin\theta_i;$$

wherein

$L_i$ is the distance between an $i^{th}$ reflecting surface 610 to 613 and the associated filter; and

$\theta_i$ is the reflection angle of the beam at the $i^{th}$ reflecting surface 610 to 613.

In the shown embodiment, the distance aperture dimensions ($C_i$) of the respective focusing lenses 605 increase with increasing channel number (i), i.e. $C_1 < C_2 < C_3 < C_4$, wherein the aperture dimension ($C_i$) of an $i^{th}$ focusing lens 605 is preferably

$$C_i = 2 \times \left(\sum_{j=1}^{i} L_j\right) \times \left(\tan(\theta_i + \theta_1) \times \cos(\theta_0 - \theta_1) - \tan(\theta_i - \theta_1) \times \cos(\theta_0 + \theta_1)\right) + \emptyset;$$

$\emptyset$ is the beam size;
$C_i$ is the aperture dimension of the $i^{th}$ focusing lens 605 which corresponds to an $i^{th}$ channel;
$i$ is the number of the respective channel (here 1 to 4);
$L_i$ is the distance between the $i^{th}$ reflecting surface 610 to 613 and the associated $i^{th}$ filter (cf. **FIG. 6**);
$\theta_i$ is the reflection angle of the beam at the $i^{th}$ reflecting surface 610 to 613;
$\theta_0$ is the reflection angle of the beam at the first reflecting surface 610 associated to the first channel, wherein the first reflecting surface 610 is the reflecting surface on which the light beam is reflected firstly;
$\theta_1$ is a reflection angle error occurring due to manufacturing tolerances and positional tolerances in the assembling process (cf. **FIG. 5**).

In other words, for each channel, its lens dimension increases with the number of reflections of the corresponding beam inside the filter block.

By the above formula, a correlation for calculating a preferred aperture dimension ($C_i$) of a respective focusing lens 605 of the $i^{th}$ channel is provided, wherein the formula is adapted to a filter block having different distances ($L_i$) between the respective reflecting surface 610 to 613 and the associated filter.

As a result, by means of varying the distance ($\Delta_i$) between two central optical axes of adjacent focusing lenses 605 the available space for the aperture dimension ($C_i$) of the respective focusing lens 605 can be adapted, thereby, allowing to increase the aperture dimensions ($C_i$) of the focusing lenses for the higher channels and thus, allowing to compensate an increased displacement of the output beams 609 occurring at these channels.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. An optical wavelength division demultiplexing device (600) for receiving light with N wavelengths providing N channels, wherein the device comprises:

   a filter block (602) comprising a plurality of N reflecting surfaces (610-613) and an oppositely arranged surface at which a plurality of N filters is arranged such that the light can be reflected between the plurality of N reflecting surfaces (610-613) and the plurality of N filters, wherein each of said N filters is transparent to a defined wavelength; and
   a plurality of N focusing lenses (605), wherein each of the N focusing lenses (605) is associated to a respective filter for collecting and focusing the light passing through the associated filter, and wherein each focusing lens from the plurality of N focusing lenses (605) has a determined aperture dimension, Ci; wherein i is the number of the respective channel; wherein each of the plurality of N reflecting surfaces (610-613) is associated to a respective filter, wherein the distance, Li, between at least one of the N reflecting surfaces (610-613) and its associated filter is different from the distance, Li, between other N reflecting surfaces (610-613) and their associated filters; and **characterized in that** the aperture dimension, Ci, of an $i^{th}$ focusing lens (605) is

   $$C_i = 2 \times \left(\sum_{j=1}^{i} L_j\right) \times \left(\tan(\theta_i + \theta_1) \times \cos(\theta_0 - \theta_1) - \tan(\theta_i - \theta_1) \times \cos(\theta_0 + \theta_1)\right) + \emptyset;$$

   wherein

   $\emptyset$ is the beam size;
   $C_i$ is the aperture dimension of the $i^{th}$ focusing lens (605) which corresponds to an $i^{th}$ channel;
   $i$ is the number of the respective channel;

$L_i$ is the distance between the $i^{th}$ reflecting surface (610-613) and the associated $i^{th}$ filter;

$\theta_i$ is the reflection angle of the beam at the $i^{th}$ reflecting surface (610-613);

$\theta_0$ is the reflection angle of the beam at the first reflecting surface (610) associated to the first channel;

$\theta_1$ is a reflection angle error; and

**N** is the total number of channels, $n \in [1,2,..., N]$.

2. Device (600) according to claim 1, wherein the distance, Li, between one of the N reflecting surfaces (610-613) and the associated filter increases with increasing channel number i, wherein the difference of two distances, Li, of adjacent reflecting surfaces (610-613) and their associated filters is preferably constant.

3. Device (600) according to one of the claims 1 or 2, wherein the distance, $\Delta i$, between two central optical axes of adj acent focusing lenses (605) increases with increasing channel number i.

4. Device (600) according to one of the claims 1 or 2 or 3, wherein the distance, $\Delta i$, between two central optical axes of adjacent focusing lenses (605) is

$$\Delta_i = 2 \times L_i \times \sin \theta_i \quad ;$$

wherein $L_i$ is the distance between an $i^{th}$ reflecting surface (610-613) and the associated filter; and $\theta_i$ is the reflection angle of the beam at the $i^{th}$ reflecting surface (610-613).

5. Device (600) according to claim 4, wherein the reflection angle, $\theta i$, of the beam at one of the N reflecting surfaces (610-613) is constant for all reflecting surfaces (610-613).

6. Device (600) according to one of the preceding claims, wherein the device further comprises:

a fiber optic cable receptacle (603) configured to receive the end of a fiber optic cable;
a collimating lens (604) optically aligned with the fiber optic cable receptacle (603,) and configured to guide the light from the fiber optical cable to the filter block (602).

7. Device (600) according to claim 6, wherein
the fiber optic cable receptacle (603), the collimating lens (604), the plurality of N focusing lenses (605) and the plurality of N filters are integrally formed.

8. Device (600) according to claim 7, wherein
the fiber optic cable receptacle (603), the collimating lens (604), the plurality of N focusing lenses (605) are integrally formed by means of plastic molding and the N filters are applied by means of coating.

9. Device (600) according to one of the preceding claims, wherein
the N wavelengths having a wavelength between 1260 nm to 1360 nm or 1460 nm to 1620 nm.

**Patentansprüche**

1. Optische Wellenlängendemultiplexvorrichtung (600) zum Aufnehmen von Licht mit N Wellenlängen, die N Kanäle bereitstellen, wobei die Vorrichtung umfasst:

einen Filterblock (602), der eine Vielzahl von N reflektierenden Oberflächen (610-613) und eine gegenüberliegend angeordnete Oberfläche umfasst, auf der eine Vielzahl von N Filtern derart angeordnet ist, dass das Licht zwischen der Vielzahl von N reflektierenden Oberflächen (610-613) und der Vielzahl von N Filtern reflektiert werden kann, wobei jedes der N Filter für eine definierte Wellenlänge transparent ist; und
eine Vielzahl von N Fokussierlinsen (605), wobei jede der N Fokussierlinsen (605) einem jeweiligen Filter zum Sammeln und Fokussieren des Lichts, das durch das zugeordnete Filter verläuft, zugeordnet ist, und wobei jede Fokussierlinse aus der Vielzahl von N Fokussierlinsen (605) eine bestimmte Öffnungsabmessung $C_i$ aufweist; wobei i die Zahl des jeweiligen Kanals ist; wobei jede der Vielzahl von N reflektierenden Oberflächen (610-613) einem jeweiligen Filter zugeordnet ist, wobei sich der Abstand $L_i$, zwischen mindestens einer der N reflektierenden Oberflächen (610-613) und ihrem zugeordneten Filter, von dem Abstand $L_i$, zwischen anderen

N reflektierenden Oberflächen (610-613) und ihren zugeordneten Filtern, unterscheidet; und **dadurch gekennzeichnet, dass** die Öffnungsabmessung, $C_i$, einer i-ten Fokussierlinse (605) ist

$$C_i = 2 \times \left(\sum_{j=1}^{i} L_j\right) \times \left(tan(\theta_i + \theta_1) \times cos(\theta_0 - \theta_1) - tan(\theta_i - \theta_1) \times cos(\theta_0 + \theta_1)\right) + \emptyset;$$

wobei
$\emptyset$ die Strahlgröße ist;
$C_i$ die Öffnungsabmessung der i-ten Fokussierlinse (605) ist, die einem i-ten Kanal entspricht;
$i$ die Zahl des jeweiligen Kanals ist;
$L_i$ der Abstand zwischen der i-ten reflektierenden Oberfläche (610-613) und dem zugeordneten i-ten Filter ist;
$\theta_i$ der Reflexionswinkel des Strahls an der i-ten reflektierenden Oberfläche (610-613) ist;
$\theta_0$ der Reflexionswinkel des Strahls an der ersten reflektierenden Oberfläche (610) ist, die dem ersten Kanal zugeordnet ist;
$\theta_i$ ein Reflexionswinkelfehler ist; und
$N$ die Gesamtzahl der Kanäle ist, $n \in [1,2, ..., N]$.

2. Vorrichtung (600) nach Anspruch 1, wobei
der Abstand, Li, zwischen einer der N reflektierenden Oberflächen (610-613) und dem zugeordneten Filter mit zunehmender Kanalzahl i zunimmt, wobei die Differenz von zwei Abständen, Li, von angrenzenden reflektierenden Oberflächen (610-613) und ihren zugeordneten Filtern vorzugsweise konstant ist.

3. Vorrichtung (600) nach einem der Ansprüche 1 bis 2, wobei
der Abstand, $\Delta i$, zwischen zwei optischen Zentralachsen von angrenzenden Fokussierlinsen (605) mit zunehmender Kanalzahl i zunimmt.

4. Vorrichtung (600) nach einem der Ansprüche 1 oder 2 oder 3, wobei

der Abstand, $\Delta i$, zwischen zwei optischen Zentralachsen von angrenzenden Fokussierlinsen (605) ist

$$\Delta_i = 2 \times L_i \times sin\,\theta_i;$$

wobei
$L_i$ der Abstand zwischen einer i-ten reflektierenden Oberfläche (610-613) und dem zugeordneten Filter ist; und
$\theta_i$ der Reflexionswinkel des Strahls an der i-ten reflektierenden Oberfläche (610-613) ist.

5. Vorrichtung (600) nach Anspruch 4, wobei
der Reflexionswinkel, $\theta i$, des Strahls an einer der N reflektierenden Oberflächen (610-613) für alle reflektierenden Oberflächen (610-613) konstant ist.

6. Vorrichtung (600) nach einem der vorstehenden Ansprüche, wobei die Vorrichtung ferner umfasst:

eine Glasfaserkabelbuchse (603), die konfiguriert ist, um das Ende eines Glasfaserkabels aufzunehmen;
eine Kollimationslinse (604), die mit der Glasfaserkabelbuchse (603) optisch ausgerichtet und konfiguriert ist, um das Licht von dem Glasfaserkabel zu dem Filterblock (602) zu leiten.

7. Vorrichtung (600) nach Anspruch 6, wobei
die Glasfaserkabelbuchse (603), die Kollimationslinse (604), die Vielzahl von N Fokussierlinsen (605) und die Vielzahl von N Filtern einstückig ausgebildet sind.

8. Vorrichtung (600) nach Anspruch 7, wobei
die Glasfaserkabelbuchse (603), die Kollimationslinse (604), die Vielzahl von N Fokussierlinsen (605) mittels Kunststoffformgebung einstückig ausgebildet sind und die N Filter mittels einer Beschichtung aufgebracht werden.

9. Vorrichtung (600) nach einem der vorstehenden Ansprüche, wobei
die N Wellenlängen eine Wellenlänge zwischen 1260 nm bis 1360 nm oder 1460 nm bis 1620 nm aufweisen.

**Revendications**

1. Dispositif de démultiplexage par répartition en longueur d'onde optique (600) permettant la réception de la lumière avec N longueurs d'onde fournissant N canaux, dans lequel le dispositif comprend :

   un bloc de filtre (602) comprenant une pluralité de N surfaces réfléchissantes (610-613) et une surface disposée à l'opposé au niveau de laquelle une pluralité de N filtres est disposée de telle sorte que la lumière peut être réfléchie entre la pluralité de N surfaces réfléchissantes (610-613) et la pluralité de N filtres, chacun desdits N filtres étant transparent à une longueur d'onde définie ; et
   une pluralité de N lentilles de focalisation (605), chacune des N lentilles de focalisation (605) étant associée à un filtre respectif pour collecter et focaliser la lumière passant à travers le filtre associé, et chaque lentille de focalisation de la pluralité de N lentilles de focalisation (605) ayant une dimension d'ouverture déterminée, $C_i$ ; i étant le numéro du canal respectif ; chacune de la pluralité de N surfaces réfléchissantes (610-613) étant associée à un filtre respectif, la distance, $L_i$, entre au moins une des N surfaces réfléchissantes (610-613) et son filtre associé étant différente de la distance, $L_i$, entre les autres N surfaces réfléchissantes (610-613) et leurs filtres associés ; et **caractérisé en ce que** la dimension d'ouverture, $C_i$, d'une $i^{ème}$ lentille de focalisation (605) est

   $$C_i = 2 \times \left( \sum_{j=1}^{i} L_j \right) \times \left( tan(\theta_i + \theta_1) \times cos(\theta_0 - \theta_1) - tan(\theta_i - \theta_1) \times cos(\theta_0 + \theta_1) \right) + \emptyset ;$$

   où
   ø est la taille du faisceau ;
   $C_i$ est la dimension d'ouverture de la $i^{ème}$ lentille de focalisation (605) qui correspond à un $i^{ème}$ canal ;
   i est le numéro du canal respectif ;
   $L_i$ est la distance entre la $i^{ème}$ surface réfléchissante (610-613) et le $i^{ème}$ filtre associé ;
   $\theta_i$ est l'angle de réflexion du faisceau au niveau de la $i^{ème}$ surface réfléchissante (610-613) ;
   $\theta_0$ est l'angle de réflexion du faisceau au niveau de la première surface réfléchissante (610) associée au premier canal ;
   $\theta_i$ est une erreur d'angle de réflexion ; et
   N est le nombre total de canaux, $n \in [1, 2, ..., N]$.

2. Dispositif (600) selon la revendication 1, dans lequel
   la distance, Li, entre l'une des N surfaces réfléchissantes (610-613) et le filtre associé augmente avec le numéro de canal i, la différence de deux distances, Li, de surfaces réfléchissantes adjacentes (610-613) et de leurs filtres associés étant de préférence constante.

3. Dispositif (600) selon l'une des revendications 1 ou 2, dans lequel
   la distance, ∆i, entre deux axes optiques centraux de lentilles de focalisation adjacentes (605) augmente avec l'augmentation du numéro de canal i.

4. Dispositif (600) selon l'une des revendications 1 ou 2 ou 3, dans lequel

   la distance, ∆i, entre deux axes optiques centraux de lentilles de focalisation adjacentes (605) est

   $$\Delta_i = 2 \times L_i \times sin\, \theta_i ;$$

   où
   $L_i$ est la distance entre une $i^{ème}$ surface réfléchissante (610-613) et le filtre associé ; et
   $\theta_i$ est l'angle de réflexion du faisceau au niveau de la $i^{ème}$ surface réfléchissante (610-613).

5. Dispositif (600) selon la revendication 4, dans lequel
   l'angle de réflexion, θi, du faisceau au niveau de l'une des N surfaces réfléchissantes (610-613) est constant pour toutes les surfaces réfléchissantes (610-613).

6. Dispositif (600) selon l'une des revendications précédentes, dans lequel le dispositif comprend en outre :

un réceptacle de câble à fibre optique (603) conçu pour recevoir l'extrémité d'un câble à fibre optique ;
une lentille collimatrice (604) optiquement alignée avec le réceptacle de câble à fibre optique (603) et conçue pour guider la lumière depuis le câble à fibre optique vers le bloc de filtre (602).

7. Dispositif (600) selon la revendication 6, dans lequel
le réceptacle de câble à fibre optique (603), la lentille collimatrice (604), la pluralité de N lentilles de focalisation (605) et la pluralité de N filtres sont formés d'un seul tenant.

8. Dispositif (600) selon la revendication 7, dans lequel
le réceptacle de câble à fibre optique (603), la lentille collimatrice (604), la pluralité de N lentilles de focalisation (605) sont formées d'un seul tenant au moyen d'un moulage plastique et les N filtres sont appliqués au moyen d'un revêtement.

9. Dispositif (600) selon l'une des revendications précédentes, dans lequel
les N longueurs d'onde ayant une longueur d'onde comprise entre 1 260 nm et 1 360 nm ou 1 460 nm à 1 620 nm.

Fig. 1

Fig. 2

Fig. 3

Fig. 4

Fig. 5

EP 3 422 614 B1

Fig. 6

EP 3 422 614 B1

Fig. 7

Fig. 8

EP 3 422 614 B1

**REFERENCES CITED IN THE DESCRIPTION**

**Patent documents cited in the description**

- US 6515776 B1
- US 2017139143 A1